# EUROPÄISCHE PATENTANMELDUNG

(11) **EP 4 074 192 A1**
(43) Veröffentlichungstag der Anmeldung: **19.10.2022**
(21) Anmeldenummer: 22168095.2
(22) Anmeldetag: 13.04.2022
(51) Int. Cl.: A23N 12/08

(54) **RÖSTMASCHINE**

(30) Priorität: 16.04.2021 DE 202021001398 U
(71) Anmelder: Dutch Master Roasters, 7041 GV 's-Heerenberg (NL)
(72) Erfinder: BUSSINK, Sander, 7001 CC Doetinchem (NL)
(74) Vertreter: Demski, Siegfried

(57) **Zusammenfassung**

Die Erfindung betrifft eine Röstmaschine 1 zum Rösten eines pflanzlichen Gutes, insbesondere von Kakao- und Kaffeebohnen, umfassend zumindest ein Gehäuse 3 mit einer Rösttrommel 24 und einer Brennkammer, in welche Gase eingeleitet und nach der Erhitzung durch einen Brenner 43 der Rösttrommel 24 zuführbar sind. Um Energiesparmaßnahmen durchzuführen und eine hohe Reinheit der Röstgase zu erreichen ist vorgesehen, dass das Gehäuse 3 zumindest im Bereich der Rösttrommel 24 doppelwandig ausgeführt ist und einen Zwischenraum 60 bildet, welcher einen Einlassstutzen 47 aufweist, über den eine Frischluftzufuhr erfolgt. Durch die Einleitung der Frischluft in das doppelwandige Gehäuse, wird die Frischluft durch die Strahlungswärme vorgewärmt, sodass eine deutliche Energieeinsparung erzielt wird und zudem gelangt die Frischluft nach weiterer Erwärmung ohne Schadstoffe in die Rösttrommel 24, sodass eine hohe Reinheit erzielt wird.

## Beschreibung

Die Erfindung betrifft eine Röstmaschine zum Rösten eines pflanzlichen Gutes, insbesondere von Kakao- oder Kaffeebohnen, umfassend zumindest ein Gehäuse mit einer Rösttrommel und einer Brennkammer, in welche Gase eingeleitet und nach der Erhitzung durch einen Brenner der Rösttrommel zuführbar sind.

Naturprodukte, wie beispielsweise Bohnen, Kerne und Samenkörner sowie Kakao- oder Kaffeebohnen werden häufig einer Wärmebehandlung unterzogen, wobei die Wärmeübertragung überwiegend durch Wärmestrahlung von strömender Heißluft erfolgt. Zu diesem Zweck sind Röstmaschinen vorgesehen, welche ein Gehäuse mit einer Rösttrommel und einer Brennkammer aufweisen. Die Rösttrommel dient zur Aufnahme des pflanzlichen Gutes und wird während des Röstvorganges in Rotation versetzt, sodass eine gute Durchmischung des pflanzlichen Gutes und ein gleichmäßiges Rösten erfolgen kann. Eine Brennkammer dient dazu, die für den Röstgang notwendigen Gase auf eine erforderliche Temperatur aufzuheizen. Üblicherweise ist in der Röstkammer eine Temperatur von etwa 370 bis 450 Grad erforderlich, um den Röstvorgang erfolgreich durchzuführen. Die erhitzen Gase rösten hierbei das pflanzliche Gut, wenn die Gase durch die Rösttrommel geleitet werden. Die aus der Röstkammer austretenden Abgase weisen eine Temperatur von ca. 150 Grad Celsius auf und werden vorzugsweise einem Zyklonabscheider zugeführt, um mitgerissene Feststoffteilchen, wie beispielsweise Schalen zu entfernen und anschließend die Abgase mit oder ohne Behandlung in die Atmosphäre abzugeben. Um eine optimale Rösttemperatur der Gase einstellen zu können, wird zweckmäßigerweise eine Reguliervorrichtung etwa in Form einer Drosselklappe verwendet, mit der die Menge des in die Rösttrommel eingeleiteten Gase regelbar ist.

Zu Energieeinsparung während des Röstens wird beispielsweis in der EP 0 862 370 vorgeschlagen, dass der Röstabgasstrom zumindest teilweise in die Brennkammer zurückgeführt wird. Nachteilig bei dieser Vorgehensweise ist, dass vorhandene Verunreinigungen und Feststoffteilchen des aus der Röstkammer austretenden Gases erneut in den Strömungskreislauf zurückgeführt werden, wodurch sich die Konzentration der Feststoffteilchen und eventuell vorhandener schädlicher Gase erhöht.

Aus den vorgenannten Gründen liegt der vorliegenden Erfindung die Aufgabenstellung zugrunde, eine Röstmaschine aufzuzeigen, welche eine energiesparende Röstmethode aufzeigt und zudem die Reinheit der Röstgase gewährleistet.

Erfindungsgemäß ist zur Lösung der Aufgabe vorgesehen, dass das Gehäuse zumindest im Bereich der Rösttrommel doppelwandig ausgeführt ist und einen Zwischenraum bildet, welcher einen Einlassstutzen aufweist, über den eine Frischluftzufuhr erfolgt. Weitere vorteilhafte Ausgestaltungen der Erfindung ergeben sich aus den Unteransprüchen.

Gegenüber dem bisher bekannten Verfahren zur Einsparung von Wärmeenergie wird durch die Erfindung ein anderer Weg beschritten. Anstelle der Rückführung der aus der Rösttrommel austretenden Röstgase zur Brennkammer wird zur Vermeidung von Verunreinigungen des Röstgases ein doppelwandiges Gehäuse verwendet, in dem die Rösttrommel drehbar gelagert ist. Durch die Doppelwandigkeit liegt ein Zwischenraum vor, welcher mit einem Einlassstutzen für eine Frischluftzufuhr versehen ist. Die angesaugte Frischluft wird durch den Zwischenraum über die innere Wandung des Gehäuses geführt und aufgrund der relativ hohen Temperaturen innerhalb der Rösttrommel wird die Innenwand des Gehäuses und damit ebenfalls die angesaugte Frischluft erwärmt, sodass die Frischluft bereits durch die Abwärme der Rösttrommel vorgewärmt wird. Die vorgewärmte Frischluft wird im oberen Bereich des Gehäuses abgezogen und über eine Rohrleitung unmittelbar der Brennkammer zugeführt, wo die Frischluft auf eine erhöhte Temperatur von 370 bis 450 Grad aufgeheizt wird. Die aufgeheizte Frischluft wird anschließend unmittelbar in die Rösttrommel eingeleitet, um den Röstvorgang durchzuführen, wobei durch die Strahlungswärme in der Rösttrommel nicht nur die Rösttrommel selbst, sondern auch die sie umgebende Innenwand des Gehäuses mit aufgeheizt wird. Auf diese Weise kann somit die Strahlungswärme der Rösttrommel dazu genutzt werden, um die Frischluft vorzuwärmen, wodurch eine nicht unerhebliche Energieeinsparung während des Röstvorganges erzielt werden kann. Ein weiterer besonderer Vorteil besteht darin, dass der Brennkammer saubere vorgewärmte Frischluft zugeführt wird, welche anschließend unmittelbar der Rösttrommel zugeleitet wird. Die aus der Rösttrommel austretenden Gase werden demgegenüber mit oder ohne Reinigungsstufe in die Atmosphäre abgegeben. Auf diese Weise wird ausschließlich vorgewärmte beziehungsweise aufgeheizte Frischluft verwendet und somit keine Verunreinigung in die Rösttrommel eingetragen.

Das ganze Verfahren zum Rösten von pflanzlichen Gut, insbesondere Kakao- oder Kaffeebohnen basiert somit auf der Verwendung von schadstofffreien Röstgasen, die zudem durch die Einleitung in den Zwischenraum auf eine Temperatur vorgewärmt werden, sodass für die Brennkammer wesentlich weniger Energie benötigt wird, um die Rösttemperatur zu erreichen.

Um eine wirkungsvolle Vorwärmung der Frischluft zu erreichen ist der Einlassstutzen des Zwischenraumes mit einem Rohrstück verbunden, welches entlang der Rösttrommel im Zwischenraum verläuft. Das Rohrstück wird vorzugsweise im unteren Bereich des Zwischenraumes angeordnet, damit die zugeführte Frischluft im Zwischenraum eine längere Wegstrecke zurücklegen muss, wodurch die Frischluft länger im Zwischenraum verbleibt und demzufolge durch die Strahlungswärme der Rösttrommel und der Innenwandung eine höhere Temperatur erreichen kann.

Damit die Frischluft gleichmäßig über die Innenwandung des Gehäuses geleitet werden kann ist im Weiteren vorgesehen, dass das Rohrstück innerhalb des Zwischenraumes mit Luftaustrittöffnungen in äquidistanten Abständen ausgestattet ist. Die Frischluft kann somit aus den Auslassöffnungen des Rohres über die gesamte Länge der Rösttrommel und des Gehäuses verteilt austreten, sodass die Innenwandung des Gehäuses gleichmäßig mit Frischluft beaufschlagt wird. Auf diese Weise wird eine optimale Ausnutzung der Wärmestrahlung erzielt und eine möglichst hohe Temperatur der Frischluft erreicht.

In Weiterer Ausgestaltung der Erfindung ist vorgesehen, dass die vorgewärmte Frischluft oberhalb der Rösttrommel aus dem Zwischenraum abgezogen und über eine Rohrleitung unmittelbar zur Brennkammer geführt wird. Um einen gewünschten Strömungsgrad einzustellen kann die vorgewärmte Frischluft gegebenenfalls mithilfe von Ventilatoren einerseits aus dem Zwischenraum abgezogen werden und andererseits der Brennkammer beschleunigt zugeführt werden.

Nach erfolgter Erwärmung der Frischluft auf die gewünschte Temperatur wird diese aus der Brennkammer abgezogen und unmittelbar der Rösttrommel zugeführt. Nach dem Durchströmen der Rösttrommel werden die Röstgase über ein Abgasrohr der Rösttrommel in die Atmosphäre abgegeben oder gegebenenfalls einer Reinigungsstufe zugeführt, die Feststoffe aus den Röstgasen, wie beispielsweise Schalen entfernt, um die Röstgase anschließend in die Atmosphäre abzugeben.

In Ausgestaltung der Erfindung ist ferner vorgesehen, dass die Rösttrommel mit innenliegenden Lamellen für eine Durchmischung des pflanzliches Gutes ausgestattet ist, wobei die Lamellen an der Innenwand der Rösttrommel befestigt sind. Dadurch, dass die Rösttrommel in einer ständigen Drehbewegung gehalten wird, erfolgt somit eine sehr gute Durchmischung des pflanzlichen Gutes, insbesondere der Kakao- oder Kaffeebohnen.

Um eine optimale Röstung des pflanzlichen Gutes vorzunehmen ist die Rösttrommel mit innenliegenden Strömungselementen zur Luftverwirbelung ausgestattet, wobei die Strömungselemente im Innenraum der Rösttrommel an der Welle gehalten sind. Die Strömungselemente dienen vorrangig dazu, die in die Rösttrommel eintretende aufgeheizte Frischluft nicht nur zu verwirbeln, sondern zielgerichtet auf das pflanzliche Gut zu lenken, damit eine optimale Röstung erfolgen kann.

In Weiterer Ausgestaltung der Erfindung ist vorgesehen, dass die Rösttrommel eine Entnahmeöffnung für das geröstete pflanzliche Gut aufweist, welches durch eine manuell betätigbare Klappe entnehmbar ist. Das pflanzliche Gut muss über einen längeren Zeitraum in der Rösttrommel verweilen bis der Röstvorgang abgeschlossen ist. Die Verweilzeit in der Rösttrommel hängt von der Art des pflanzlichen Gutes, dem Röstgrad und der Rösttemperatur ab. Hierzu werden Erfahrungswerte verwendet, die an den gewünschten Geschmack angepasst werden können. Beispielsweise kann Kaffee einem unterschiedlichen Röstgrad unterzogen werden, um den Geschmack des Kaffees zu verändern.

Unter Berücksichtigung der Rösttemperatur und der Verweilzeit in der Rösttrommel kann im Anschluss das geröstete pflanzliche Gut aus der Rösttrommel über eine Entnahmeöffnung abgezogen werden. Die Entnahmeöffnung ist hierbei durch eine manuell betätigbare Klappe verschlossen und wird erst dann geöffnet, wenn die erforderliche Röstzeit erreicht wurde.

Um zu verhindern, dass ein Bediener der Röstmaschine in die Rösttrommel greifen kann ist vorgesehen, dass die Klappe durch einen Anschlag nur über einen begrenzten Winkelbereich geöffnet werden kann, gerade so, dass die Kaffeebohnen bei der Drehung der Rösttrommel aus dieser herausfallen.

In Weiterer Ausgestaltung ist vorgesehen, dass die Klappe durch eine Arretierung in einer geöffneten Position fixierbar ist, sodass eine Entnahme der Kaffeebohnen auch über einen längeren Zeitraum durchführbar ist, ohne dass der Bediener die Klappe in der geöffneten Position halten muss.

In Weiterer Ausgestaltung der Erfindung ist ferner vorgesehen, dass die Röstmaschine einen Einfülltrichter für den Rohkaffee aufweist, welcher erfindungsgemäß mit einer Absaugvorrichtung für Staub ausgestattet ist. Bei der Zuführung des Rohkaffees in die Rösttrommel entsteht eine Staubentwicklung, welche unterwünscht ist und die Umgebung der Röstmaschine nachhaltig beeinflussen kann. Soweit eine Absaugvorrichtung im Einfülltrichter oder oberhalb des Einfülltrichters vorgesehen wird, kann die Staubentwicklung deutlich vermindert werden. Im Extremfall kann sämtlicher entstehender Staub unmittelbar abgesaugt werden.

In Ausgestaltung der Erfindung ist ferner vorgesehen, dass die Röstmaschine mit einer Wiegeeinrichtung für das geröstete pflanzliche Gut ausgestattet ist, sodass die geröstete Menge nach der Entnahme aus der Rösttrommel genau bestimmt werden kann.

Das aus der Rösttrommel entnommene pflanzliche Gut besitzt eine recht hohe Temperatur, sodass das Gut einem Abkühlprozess unterzogen werden muss. Die erfindungsgemäße Röstmaschine weist hierzu eine tellerförmige Abkühlvorrichtung auf, auf welche das geröstete pflanzliche Gut durch die manuell betätigbare Klappe gelangt. Aufgrund der Größe der tellerförmigen Abkühlvorrichtung kann somit eine gleichmäßige und schnelle Abkühlung erfolgen.

In Ausgestaltung der Erfindung ist hierbei vorgesehen, dass die Abkühlvorrichtung durch einen Antriebsmotor drehbar ist und mit Schaufeln ausgestattet ist, welche das pflanzliche Gut durchmischen, oder dass die Abkühlvorrichtung feststehend ausgebildet ist und die Schaufeln über einen Antriebsmotor eine Drehbewegung zum Durchmischen des Gutes ausführen.

Die Abkühlvorrichtung kann durch einen Antriebsmotor drehbar gelagert sein, wobei oberhalb des aufliegenden Gutes Schaufeln vorhanden sind, welche für eine ständige Durchmischung des aufgeheizten Gutes sorgt und somit ein gleichmäßiger Kühlvorgang gewährleistet ist. Zur Drehung ist hierbei nur ein innenliegendes Auflagegitter oder ein Auflagerost vorgesehen. Alternativ besteht die Möglichkeit, dass die Abkühlvorrichtung feststehend ausgebildet ist und die Schaufeln über einen Antriebsmotor eine Drehbewegung zum Durchmischen des Gutes ausführen. Hierbei besteht die Möglichkeit, dass der Antriebsmotor für die Kühlvorrichtung oder die Schaufeln eine variable Einstellung der Drehzahl ermöglicht, um eine langsame und gleichmäßige Abkühlung des gerösteten Gutes vorzusehen.

In besonderer Ausgestaltung der Erfindung ist vorgesehen, dass die Röstmaschine zumindest eine verdeckt liegende LED-Lichtleiste aufweist, wobei es sich vorzugsweise um mehrere LED-Lichtleisten handeln kann, die sowohl stirnseitig als auch im Seitenbereich der Röstmaschine angeordnet werden können. Durch Verwendung von LED-Lichtleisten wird ein besonderes Augenmerk auf die Röstmaschine gerichtet, wodurch diese sich beispielsweise dadurch auszeichnet, dass sie in einem Geschäftsraum aufgestellt werden kann und der gesamte Röstvorgang für Kunden nachvollziehbar ist.

Ebenso besteht die Möglichkeit, dass die Röstmaschine mit farbigen abnehmbaren Blenden oder Verkleidungselementen ausgestattet ist, um die Aufmerksamkeit der Kunden auf die Röstmaschine zu lenken, wobei vorzugsweise die Farbe Grün für die Blenden ausgewählt werden kann, da die erfindungsgemäße Röstmaschine besonders umweltfreundlich ist.

Die vorliegende Erfindung zeichnet sich dadurch aus, dass auf die bisherige Röstmethode mit einer Rückführung der Röstgase aus der Rösttrommel zur Brennkammer verzichtet wird und stattdessen eine Vorerwärmung der Frischluft erfolgt, und zwar in der Weise, dass die Frischluft in einen Zwischenraum durch eine doppelwandige Ausführung des Gehäuses gelangt und durch die Strahlungswärme der Rösttrommel vorgeheizt wird. Die auf diese Weise vorgeheizte Frischluft wird im Anschluss der Brennkammer zugeführt, um die gewünschte Temperatur von 370 bis 450 Grad zu erreichen. Durch die vorgewärmte Frischluft muss aber wesentlich weniger Energie aufgebracht werden, um die vorgenannte Temperatur zu erreichen, sodass ein besonders energiesparendes umweltschonendes Röstverfahren möglich ist. Durch die Verteilung der Frischluft innerhalb der Zwischenwandung mit Sicherstellung einer gleichmäßigen Strömung über die Innenwandung des Gehäuses kann die Vorerwärmung der Frischluft besonders effektiv ausgeführt werden. Diese Vorgehensweise schließt aber nicht aus, dass die aus der Rösttrommel entnommene Röstluft mit Frischluft angereichert und nochmals aufgeheizt der Rösttrommel zugeführt wird.

Die Erfindung wird im Nachfolgenden anhand der Figuren nochmals erläutert.

Es zeigt
- Fig. 1: in einer perspektivischen Ansicht die erfindungsgemäße Röstmaschine,
- Fig. 2: in einer Seitenansicht die Röstmaschine ohne Verkleidungselemente gemäß Figur 1,
- Fig. 3: in einer perspektivischen Teilansicht die Röstmaschine gemäß Figur 1 mit entfernten Verkleidungselementen,
- Fig. 4: in einer perspektivischen Teilansicht die Röstmaschine gemäß Figur 3 mit Angabe des Verlaufs der Frischluftzuführung und
- Fig. 5: in einer teilweise geschnittenen perspektivischen Teilansicht die Röstmaschine.

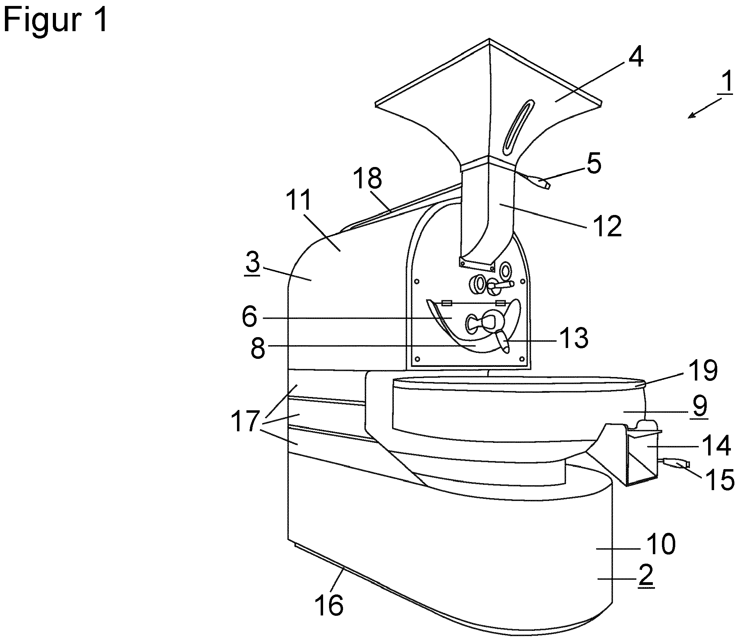

Figur 1 zeigt eine neue Röstmaschine 1, welche in unterschiedlichen Baugrößen hergestellt werden kann und einen futuristischen Eindruck hinterlässt. Die Röstmaschine 1 besteht aus einem unteren Sockel 2 und einem oberen Gehäuse 3, in dem eine verdeckt liegende Rösttrommel drehbar einliegt. Über einen Einfülltrichter 4 wird das pflanzliche Gut, beispielsweise Kakao- oder Kaffeebohnen zugeführt, wobei eine innenliegende Klappe mithilfe eines Hebels 5 geöffnet und geschlossen werden kann. Über eine durch eine Klappe 6 verschlossene Entnahmeöffnung 7 gelangt das geröstete pflanzliche Gut über einen Schüttkranz 8 auf eine Abkühlvorrichtung 9.

Der Sockel 2 besitzt ein Verkleidungselement 10 und dient zur Aufnahme eines Antriebsmotors, damit die Abkühlvorrichtung 9 beziehungsweise ein einliegendes Rost eine Drehbewegung ausführen kann, um eine gute Durchmischung des gerösteten pflanzlichen Gutes zu ermöglichen. Alternativ können die Drehschaufeln der Abkühlvorrichtung mit dem Antriebsmotor angetrieben werden. Das Gehäuse 3 weist ebenfalls mehrere Verkleidungselemente 11 auf, wobei sich innerhalb des Gehäuses 3 die drehbare Rösttrommel mit Antriebsmotor sowie eine Frischluftzuführung, eine Brennkammer mit Abluft und weitere Rohre zur Zuführung der Frischluft in die Rösttrommel befindet. An dem Gehäuse 3 ist über einen kantigen Zuführflansch 12 der Einfülltrichter 4 mit dem Gehäuse 3 verbunden. Durch einen Hebel kann die Zuführung des pflanzlichen Gutes in die Rösttrommel freigegeben oder unterbrochen werden.

In der Front des Gehäuses 3 befindet sich eine Entnahmeöffnung 7 mit Klappe 6 und Schüttkragen 8, wobei die Klappe 6 mit einem Griff 13 ausgestattet ist. Auf die Abkühlvorrichtung 9 wird das pflanzliche Gut nach Öffnen der Klappe 6 durch die Drehbewegung der Rösttrommel ausgetragen und nach dem Abkühlen kann über eine Schütte 14 mit Griff 15 das abgekühlte pflanzliche Gut entnommen werden.

Sowohl der Sockel 2 als auch das Gehäuse 3 ist im Seitenbereich mit Blenden 16, 17, 18, 19 ausgestattet, welches austauschbar sind und durch ihre farbliche Gestaltung den technischen Charakter der Röstmaschine 1 aufwerten. Vorzugsweise kommt hierbei die Farbe Grün zur Anwendung, welche symbolisch auf eine umweltfreundliche Röstmaschine 1 hinweist.

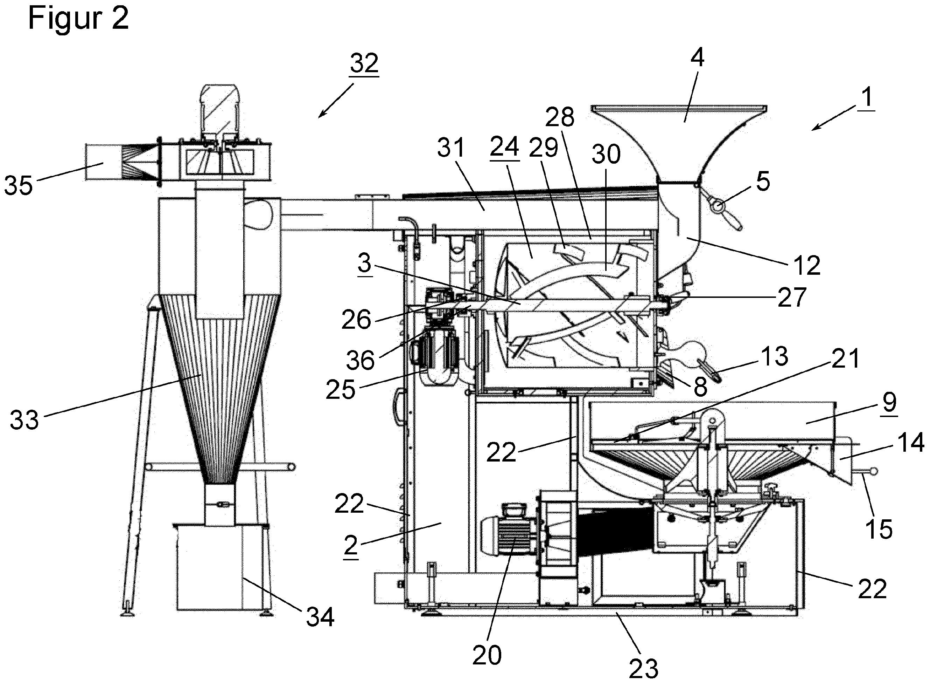

Die Funktionsweise der Röstmaschine 1 mit erfindungsgemäßer Frischluftzuführung wird zur Figur 2 näher beschrieben.

Figur 2 zeigt in einer geöffneten Seitenansicht die Röstmaschine 1 ohne Verkleidungselemente. Das untere seitliche Verkleidungselement und die oberen seitlichen Verkleidungselemente des Gehäuses wurden entfernt, sodass ein Einblick in die Röstmaschine 1 möglich ist. Im Sockel 2 ist ein Antriebsmotor 20 für die Abkühlvorrichtung 9 angeordnet. Über eine Antriebswelle wird in diesem Fall zumindest eine Schaufel 21 in eine Drehbewegung versetzt, sodass mithilfe der Schaufel 21 das geröstete pflanzliche Gut zum Abkühlen gewendet werden kann. Nachdem der Abkühlvorgang beendet wurde kann über die Schütte 14 mit Griff 15 das pflanzliche Gut aus der Abkühlvorrichtung 9 entnommen werden.

Die gesamte Konstruktion der Röstmaschine 1 ruht hierbei auf dem Sockel 2, welcher durch ein Rahmengestell 22 mit Boden 23 gebildet wird. Das Rahmengestell 22 erstreckt sich hierbei bis in den oberen Bereich des Gehäuses 3 und stützt beispielsweise den Einfülltrichter 4 sowie die Schüttzuführung 5 ab. Von dem Einfülltrichter 4 gelangt das pflanzliche Gut in eine Rösttrommel 24. Die Rösttrommel 24 besitzt eine Drehachse 36, welche über zwei Lagerelemente 26, 27 im Gehäuse 3 abgestützt und während des Röstvorganges durch einen Antriebsmotor 25 in eine laufende Drehung versetzt wird.

Die Rösttrommel 24 ist wie aus den nachfolgenden Figuren ersichtlich von einem doppelwandigen Gehäuse 28 umgeben. Innerhalb der Rösttrommel 24 befinden sich Lamellen 29 für eine gute Durchmischung des pflanzlichen Gutes, wobei die Lamellen 29 an der Innenwandung der Rösttrommel 24 befestigt sind. In der Mitte der Rösttrommel 24 befinden sich Strömungselemente 30, welche für eine gleichmäßige Luftverteilung der Röstluft innerhalb der Rösttrommel 24 sorgen, bevor die Luft aus der Rösttrommel 24 abgezogen wird. Die Strömungselemente 30 sind an der Welle 36 befestigt. Der aus dieser Ansicht nicht erkennbare Brenner ist mit einem Abgasrohr 31 verbunden, welches die Abgase in die Atmosphäre ableitet. In der Zeichnung ist zusätzlich eine Reinigungsstufe 32 für die Abgase dargestellt, welche aus einem Zyklon 33 besteht. Im Zyklon 33 werden Feststoffe von den Rauchgasen separiert und in einem Behälter 34 aufgefangen, der entleert werden kann. Nachdem die Feststoffe entfernt wurden, werden die Rauchgase über ein Abgasrohr 35 in die Atmosphäre abgegeben. Die Reinigungsstufe 32 ist nicht zwingend erforderlich, weil die Röstmaschine 1 sowohl mit als auch ohne Reinigungsstufe 32 betrieben werden kann.

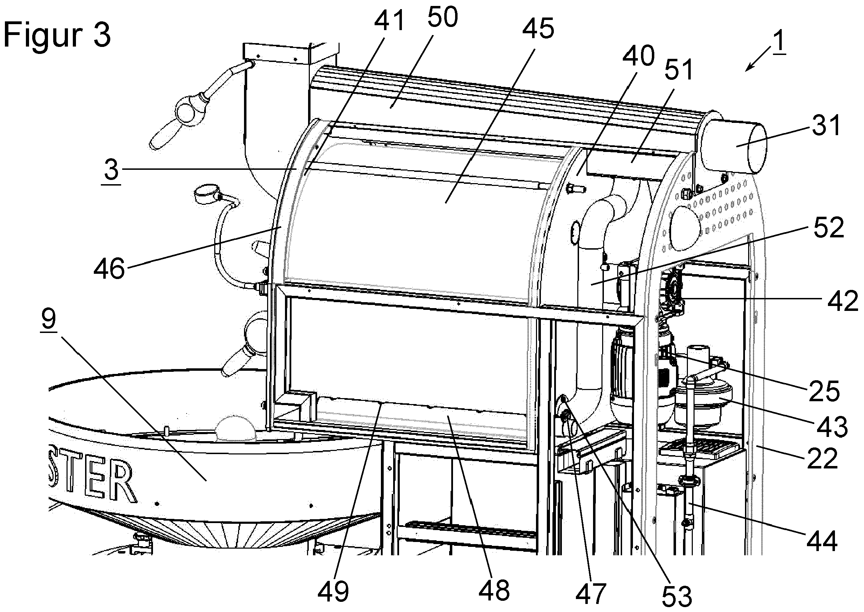

Figur 3 zeigt in einer perspektivischen Teilansicht die Röstmaschine 1 im rückwärtigen Bereich, wobei die Verkleidungselemente entfernt sind.

Aus dieser Ansicht ist das Rahmengestell 22 ersichtlich, welches im Prinzip aus zwei Stützen 37 besteht, die im oberen Bereich halbrund zusammengeführt sind. Die äußeren Stützen 37 sind bis zum Boden heruntergeführt, während zwei weitere Stützen 38 mit einem oberen runden Bogen oberhalb der Abkühlvorrichtung 9 verbunden sind. Zur Lagerung der Rösttrommel 24 ist eine Stützwand 40 und 41 vorgesehen, welche die beiden Lagerelemente 26, 27 für die innenliegende Rösttrommel 24 aufnehmen. Durch die abgenommenen Verkleidungselemente ist hierbei der Antriebsmotor 25 für die Rösttrommel sowie ein Getriebe 42 ersichtlich. Über einen Brenner 43 kann die Röstluft aufgeheizt werden, wobei der Brenner 43 an eine Gasleitung 44 angeschlossen ist.

Das Besondere der Röstmaschine 1 besteht darin, dass das Gehäuse 3 eine doppelwandige Ummantelung der Rösttrommel 24 aufweist. Eine erste Wandung 45 ist zwischen den beiden Stützwänden 40, 41 angeordnet und mit diesen verbunden. Die Stützwände 40, 41 werden mit einer zweiten nur teilweise dargestellten Wandung 46 versehen, sodass zwischen den beiden Wandungen 45, 46 ein Zwischenraum 60 entsteht, welcher zur Zuführung von Frischluft verwendet wird. Die Frischluft wird über einen Stutzen 47 angesaugt und gelangt über ein Rohrstück 48 mit Luftaustrittsöffnungen 49 in den Zwischenraum 60. Auf diese Weise kann die vorhandene Wärme der Rösttrommel dazu genutzt werden die Frischluft vorzuwärmen, wodurch eine deutliche Reduzierung der erforderlichen Wärmeenergie möglich ist. Die Frischluft strömt hierbei seitlich über die gesamte Länge der Wandung 45 nach oben und wird erwärmt. Die Frischluft wird hierbei über zwei Stutzen 47 zugeführt, die sich seitlich links und rechts im unteren Bereich des Zwischenraumes 60 befinden. Im oberen Bereich wird über ein Rohr 50 mit Anschlusskasten 51 die vorgewärmte Luft abgezogen und nach Erhitzung über ein Rohr 52 zur Rösttrommel 24 geführt, wobei die Luft unmittelbar über eine Öffnung 53 in den Röstraum gelangt. Hierbei wird die vorgewärmte Frischluft zuvor durch einen Brenner aufgeheizt, um die erforderliche Temperatur zum Rösten des pflanzlichen Gutes zu erreichen. Auf diese Weise kann somit durch die Vorerwärmung der Frischluft wesentliche Energie eingespart werden. Zudem ist sichergestellt, dass die angesaugte Frischluft nicht mit Abgasen des Brenners vermischt werden kann, weil die Abgase des Brenners unmittelbar über ein Abgasrohr 31 abgeleitet werden, entweder in die Atmosphäre oder gegebenenfalls zu einer Reinigungsstufe 32 mit einem Zyklon 33.

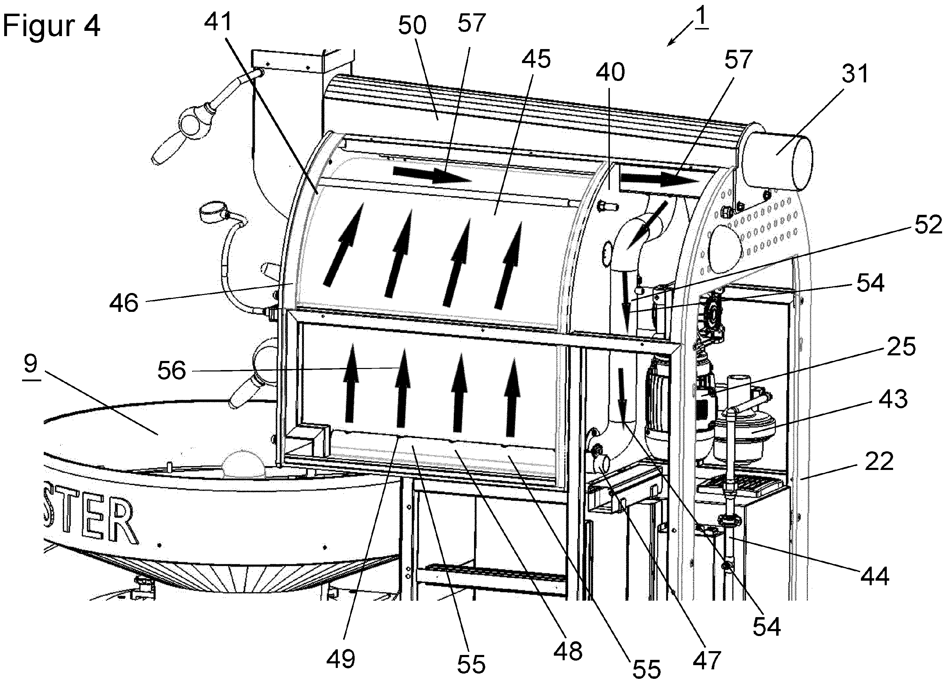

Figur 4 zeigt in einer perspektivischen Teilansicht nochmals die Röstmaschine 1 aus einer rückwärtigen Ansicht, wobei zusätzlich die Luftführung durch Pfeile gekennzeichnet ist. Die Frischluftzufuhr wird durch einen Pfeil 54 angedeutet, und zwar in den offenen Stutzen 47. Von dem Stutzen 47 gelangt die Luft gemäß den Pfeilen 55 in das Rohrstück 48 und über die vorhandenen Luftaustrittsöffnungen 49 in den Zwischenraum 60, wie durch die Pfeile 56 angedeutet. Im oberen Bereich der Rösttrommel 24 wird die Luft gemäß der Pfeildarstellung 57 zu einem Brenner geleitet und nach der Erwärmung über ein Rohr 52 gemäß den Pfeilen 58 unmittelbar in den Röstraum der Röstmaschine 1 geführt.

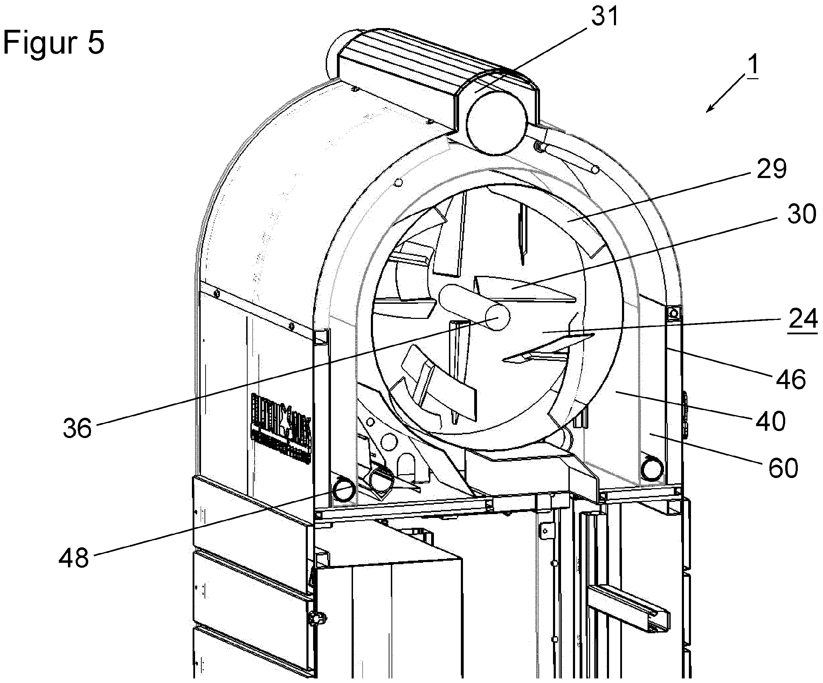

Figur 5 zeigt in einer geschnittenen perspektivischen Teilansicht nochmals die Röstmaschine 1. Aus der Schnittdarstellung ist die Rösttrommel 24 mit ihren Lamellen 29 und Strömungselementen 30 ersichtlich. In der Mitte liegt die Welle 36, die über Lagerelemente 26, 27 in den Stützwänden 40, 41 gehalten ist. Die Rösttrommel 24 ist mit einer ersten Wandung 45 sowie einer zweiten Wandung 46 umgeben, sodass ein Zwischenraum 60 vorliegt. Im Zwischenraum 60 befindet sich im unteren Bereich ein Rohrstück 48 mit Luftaustrittsöffnungen 49, wobei das Rohrstück 48 durch die Stützwand 40 ragt und über einen Stutzen 47 die Frischluftzufuhr erfolgt. Die zugeführte Frischluft gelangt hierbei in den Zwischenraum 60 und wird durch die Strahlungswärme der Rösttrommel 2 aufgeheizt, sodass die Luft nach oben aufsteigt und über ein Rohr 50 zum Brenner gelangt, wo sie nach erfolgter Erwärmung über ein weiteres Rohr 52 unmittelbar dem Röstraum zugeführt wird.

### Bezugszeichenliste:

- 1: Röstmaschine
- 2: Sockel
- 3: Gehäuse
- 4: Einfülltrichter
- 5: Hebel
- 6: Klappe
- 7: Entnahmeöffnung
- 8: Schüttkragen
- 9: Abkühlvorrichtung
- 10: Verkleidungselement
- 11: Verkleidungselement
- 12: Zuführflansch
- 13: Griff
- 14: Schütte
- 15: Griff
- 16: Blende
- 17: Blende
- 18: Blende
- 19: Blende
- 20: Antriebsmotor
- 21: Schaufel
- 22: Rahmengestell
- 23: Boden
- 24: Rösttrommel
- 25: Antriebsmotor
- 26: Lagerelement
- 27: Lagerelement
- 28: Gehäuse
- 29: Lamelle
- 30: Strömungselement
- 31: Abgasrohr
- 32: Reinigungsstufe
- 33: Zyklon
- 34: Behälter
- 35: Abgasrohr
- 36: Welle
- 37: Stütze
- 38: Stütze
- 40: Stützwand/
- 41: Stützwand
- 42: Getriebe
- 43: Brenner
- 44: Gasleitung
- 45: Wandung
- 46: Wandung
- 47: Stutzen
- 48: Rohrstück
- 49: Luftaustrittsöffnung
- 50: Rohr
- 51: Anschlusskasten
- 52: Rohr
- 53: Öffnung/ Pfeildarstellung
- 54: Pfeil
- 55: Pfeil
- 56: Pfeil
- 57: Pfeil
- 58: Pfeil
- 60: Zwischenraum

## Patentansprüche

1. Röstmaschine (1) zum Rösten eines pflanzlichen Gutes, insbesondere von Kakao- und Kaffeebohnen, umfassend zumindest ein Gehäuse (3) mit einer Rösttrommel (24) und einer Brennkammer, in welche Gase eingeleitet und nach der Erhitzung durch einen Brenner (43) der Rösttrommel (24) zuführbar sind,
**dadurch gekennzeichnet,**
**dass** das Gehäuse (3) zumindest im Bereich der Rösttrommel (24) doppelwandig ausgeführt ist und einen Zwischenraum (60) bildet, welcher einen Einlassstutzen (47) aufweist, über den eine Frischluftzufuhr erfolgt.

2. Röstmaschine (1) nach Anspruch 1,
**dadurch gekennzeichnet,**
**dass** der Einlassstutzen (47) des Zwischenraumes (60) mit einem Rohrstück (48) verbunden ist, welches entlang der Rösttrommel (1) im Zwischenraum (60) verläuft.

3. Röstmaschine (1) nach Anspruch 1 oder 2,
**dadurch gekennzeichnet,**
**dass** das Rohrstück (48) innerhalb des Zwischenraumes (60) mit Luftaustrittsöffnungen (49) in äquidistanten Abständen ausgestattet ist.

4. Röstmaschine (1) nach Anspruch 1, 2 oder 3,
**dadurch gekennzeichnet,**
**dass** die vorgewärmte Frischluft oberhalb der Rösttrommel (24) aus dem Zwischenraum (60) abziehbar ist, und/oder dass die durch die Rösttrommel (24) vorgewärmte Frischluft über eine Rohrleitung (52) der Brennkammer zuführbar ist.

5. Röstmaschine (1) nach einem der Ansprüche 1 bis 4,
**dadurch gekennzeichnet,**
**dass** die in der Brennkammer erhitzte Frischluft der Rösttrommel (24) zuführbar ist, und/oder dass die Röstgase über ein Abgasrohr (31) der Rösttrommel (24) in die Atmosphäre austreten, oder dass die Röstgase über ein Abgasrohr (31) der Rösttrommel (24) einer Reinigungsstufe (32) zuführbar sind und danach in die Atmosphäre austreten.

6. Röstmaschine (1) nach einem der Ansprüche 1 bis 5,
**dadurch gekennzeichnet,**
**dass** die Rösttrommel (24) mit innenliegenden Lamellen (29) für eine Durchmischung des pflanzlichen Gutes ausgestattet ist, wobei die Lamellen (29) an der Innenwand der Rösttrommel (24) befestigt sind.

7. Röstmaschine (1) nach einem der Ansprüche 1 bis 6,
**dadurch gekennzeichnet,**
**dass** die Rösttrommel (24) mit innenliegenden Strömungselementen (30) zur Luftverwirbelung ausgestattet ist, wobei die Strömungselemente im Innenraum der Rösttrommel an einer Welle (36) gehalten sind.

8. Röstmaschine (1) nach einem der Ansprüche 1 bis 7,
**dadurch gekennzeichnet,**
**dass** die Rösttrommel (24) eine Entnahmeöffnung (7) für das geröstete pflanzliche Gut aufweist, welches durch eine manuell betätigbare Klappe (6) entnehmbar ist.

9. Röstmaschine (1) nach einem der Ansprüche 1 bis 8,
**dadurch gekennzeichnet,**
**dass** die Klappe (6) durch einen Anschlag nur über einen begrenzten Winkelbereich zu öffnen ist, und/oder dass die Klappe (6) durch eine Arretierung in einer geöffneten Position fixierbar ist.

10. Röstmaschine (1) nach einem der Ansprüche 1 bis 9,
**dadurch gekennzeichnet,**
**dass** die Röstmaschine (1) einen Einfülltrichter (4) für das pflanzliche Gut aufweist, welcher mit einer Absaugvorrichtung für Staub ausgestattet ist, und/oder dass die Röstmaschine (1) mit einer Wiegeeinrichtung für das geröstete pflanzliche Gut ausgestattet ist.

11. Röstmaschine (1) nach einem der Ansprüche 1 bis 10,
**dadurch gekennzeichnet,**
**dass** die Röstmaschine (1) mit einer tellerförmigen Abkühlvorrichtung (9) ausgestattet ist.

12. Röstmaschine (1) nach einem der Ansprüche 1 bis 11,
**dadurch gekennzeichnet,**
**dass** die Abkühlvorrichtung (9) durch einen Antriebsmotor (20) drehbar ist und mit Schaufeln ausgestattet ist, welche das pflanzliche Gut durchmischen, oder dass die Abkühlvorrichtung (9) feststehend ausgebildet ist und die Schaufeln über einen Antriebsmotor (20) eine Drehbewegung zum Durchmischen des pflanzlichen Gutes ausführen.

13. Röstmaschine (1) nach einem der Ansprüche 1 bis 12,
**dadurch gekennzeichnet,**
**dass** der Antriebsmotor (20) für die Kühlvorrichtung (9) eine variable Einstellung der Drehzahl vorsieht.

14. Röstmaschine (1) nach einem der Ansprüche 1 bis 13,
**dadurch gekennzeichnet,**
**dass** die Röstmaschine (1) zumindest eine verdeckt liegende LED-Lichtleiste aufweist.

15. Röstmaschine (1) nach einem der Ansprüche 1 bis 14,
**dadurch gekennzeichnet,**
**dass** die Röstmaschine (1) mit farbigen, abnehmbaren Blenden (16, 17, 18, 19) oder Verkleidungselementen (10, 11) ausgestattet ist.
